# EUROPÄISCHE PATENTANMELDUNG

(11) **EP 1 321 706 A2**
(43) Veröffentlichungstag der Anmeldung: **25.06.2003**
(21) Anmeldenummer: 02025086.6
(22) Anmeldetag: 12.11.2002
(51) Int. Cl.: F16P 3/14

(54) **Berührungslos wirkende Schutzeinrichtung**

(30) Priorität: 21.12.2001 DE 10163537
(71) Anmelder: Sick AG, 79183 Waldkirch, Breisgau (DE)
(72) Erfinder: Klingelhöfer, Christian, Dr., 79110 Freiburg (DE); Haberer, Manfred, 79359 Riegel (DE); Maestro, Ana c/o Sick AG, 79183 Waldkirch (DE); Plasberg, Georg, Dr., 79353 Bahlingen (DE)
(74) Vertreter: Manitz, Finsterwald & Partner GbR

(57) **Zusammenfassung**

Eine berührungslos wirkende Schutzeinrichtung (10) zur Sicherung eines Gefahrenbereichs einer Maschine oder dergleichen umfasst ein optisches Auswertefeld (12) und eine Steuer- und Auswerteeinrichtung (16), die außer einem Sicherungsbetrieb, bei dem infolge eines jeweiligen Eingriffs in das Auswertefeld ein Warn- oder Maschinenstoppsignal erzeugt wird, einen Taktbetrieb ermöglicht, bei dem infolge wenigstens eines jeweiligen Eingriffs in das Auswertefeld (12) ein Freigabesignal erzeugt wird, um einen jeweiligen Maschinenzyklus freizugeben, wobei für den Sicherungsbetrieb und für den Taktbetrieb ein und dasselbe Auswertefeld (12) vorgesehen und die Steuer- und Auswerteeinrichtung (16) so ausgelegt ist, dass nur ein Teil des Auswertefeldes sowohl für den Sicherungsbetrieb als auch für den Taktbetrieb überwacht wird.

## Beschreibung

Die Erfindung betrifft eine berührungslos wirkende Schutzeinrichtung zur Sicherung eines Gefahrenbereichs einer Maschine oder dergleichen.

Bekannte Sicherheitslichtgitter dienen unter anderem dem Schutz einer jeweiligen Bedienungsperson oder anderer Personen vor Gefahren, die von Maschinen oder dergleichen ausgehen, zum Beispiel infolge schneller Bewegungen mechanischer Teile, wie zum Beispiel bei Pressen. Ein entsprechendes Sicherheitslichtgitter ist beispielsweise in der IEC 61496 angegeben. Mittels einer Vielzahl von Sende- und Empfangselementen wird ein optisches Schutzfeld erzeugt. Dieses kann beispielsweise zwischen voneinander getrennten Sende- und Empfangseinheiten oder zum Beispiel zwischen einer auf einer Seite des Schutzfeldes angeordneten kombinierten Sende/Empfangs-Einheit und einer Reflektoreinheit gebildet sein. Ein jeweiliger Eingriff in das optische Schutzfeld bzw. die damit einhergehende Unterbrechung mindestens eines Lichtstrahls führt in der Regel zu einem Abschalten der so genannten sicheren Ausgänge (OSSDs = Output Signal Switching Devices) der berührungslos wirkenden Schutzeinrichtung. Durch eine direkte Einbindung dieser Ausgänge in den Stoppkreis der betreffenden Maschine wird bei einem entsprechenden Eingriff in das optische Schutzfeld ein Maschinenstopp ausgelöst.

Sogenannte "intelligente" Lichtgitter (vgl. z.B. DE 44 24 537 A1) weisen zusätzliche Funktionen, wie beispielsweise "blanking" (Ausblendung definierter Teilbereiche) und "Reduzierte Auflösung" auf, die es ermöglichen, dass bei bestimmten Eingriffen in das optische Schutzfeld die normalerweise erfolgende Auslösung eines Alarm- oder Abschaltsignals verhindert wird.

Es wurden auch bereits Lichtgitter mit solchen Zusatzfunktionen, wie einer "Taktsteuerung" oder einer "PSDI" (presence sensing device initiation) vorgeschlagen, die bei Maschinen einsetzbar sind, die einzelne Zyklen durchfahren, die erst nach Freigabe mittels eines elektrischen Signals gestartet werden. Aufgrund der Taktsteuerung oder PSDI-Funktion können nun ein oder mehrere Eingriffe in das Schutzfeld während eines nicht gefährlichen Abschnitts des Maschinenzyklus zur Erzeugung eines Freigabesignals für einen neuen Maschinenzyklus genutzt werden. Die betreffenden Eingriffe in das Schutzfeld müssen ohnehin erfolgen, um zum Beispiel Werkstücke in die Maschine einzulegen und/oder zu entfernen. Mit einer solchen Taktsteuerung oder PSDI-Funktion kann die Produktivität der betreffenden Maschine also entsprechend gesteigert werden, da das bisher erforderliche zusätzliche, manuelle Freigeben der Maschine entfällt.

Bisher wurde eine Taktsteuerung oder PSDI-Funktion stets nur für das gesamte optische Schutzfeld des betreffenden Lichtgitters eingesetzt, das heißt bisher wurde stets das ganze Schutzfeld des Lichtgitters für die Taktsteuerung benutzt. Unterbrechungen, die zur Taktsteuerung herangezogen werden sollen, sind aber in der Regel nur die, die im Bereich der Hände oder Arme der zu schützenden Personen liegen. Andere Unterbrechungen können zu einem Fehlstart eines Maschinenzyklus führen und das jeweilige Werkstück und/oder die jeweiligen Maschinenteile beschädigen.

Um die betreffenden Bereiche unterschiedlich auswerten zu können, wäre es beispielsweise möglich, zwei Lichtgittersysteme mit unterschiedlichen Schutzfeldern zu montieren und diese mit einem Steuergerät verbinden, um damit nur dann einen Takt auszulösen, wenn das Lichtgitter mit der dem Bereich der Hände oder Arme entsprechenden kürzeren Schutzfeldhöhe unterbrochen wird. Eine derartige Lösung weist nun aber eine Reihe von Nachteilen auf. So ist eine entsprechende Ausführung aufwändig und teuer. Die betreffenden Bereiche sind durch die Größe bzw. Schutzfeldhöhe der Lichtgitter fest definiert und benötigen sehr viel Bauraum an der Maschine, wo im Allgemeinen ohnehin relativ wenig Platz zur Verfügung steht.

Ziel der Erfindung ist es, eine verbesserte berührungslos wirkende Schutzeinrichtung der eingangs genannten Art zu schaffen, bei der die zuvor genannten Nachteile beseitigt sind.

Erfindungsgemäß wird diese Aufgabe gelöst durch eine berührungslos wirkende Schutzeinrichtung zur Sicherung eines Gefahrenbereichs einer Maschine oder dergleichen, mit einem optischen Auswertefeld und einer Steuer- und Auswerteeinrichtung, die außer einem Sicherungsbetrieb, bei dem infolge eines jeweiligen Eingriffs in das Auswertefeld ein Warn- oder Maschinenstoppsignal erzeugt wird, einen Taktbetrieb ermöglicht, bei dem infolge wenigstens eines jeweiligen Eingriffs in das Auswertefeld ein Freigabesignal erzeugt wird, um einen jeweiligen Maschinenzyklus freizugeben, wobei für den Sicherungsbetrieb und für den Taktbetrieb ein und dasselbe Auswertefeld vorgesehen und die Steuer- und Auswerteeinrichtung so ausgelegt ist, dass nur ein Teil des Auswertefeldes sowohl für den Sicherungsbetrieb als auch für den Taktbetrieb überwacht wird.

Für den Sicherungsbetrieb und den Taktbetrieb wird also ein und dasselbe optische Auswertefeld verwendet. Dieses wird elektronisch unterteilt, um dafür zu sorgen, dass für den Taktbetrieb nur ein Teil des optischen Auswertefeldes entsprechend überwacht wird.

Gemäß einer bevorzugten praktischen Ausführungsform der erfindungsgemäßen berührungslos wirkenden Schutzeinrichtung ist das optische Auswertefeld in der Steuer- und Auswerteeinrichtung elektronisch in mehrere Bereiche unterteilt, die die Teilbereiche für den Sicherungsbetrieb und für den Taktbetrieb definieren.

Es ist also beispielsweise ausgeschlossen, dass ein während des Taktbetriebs erfolgender Eingriff in einen anderen als den für diesen Taktbetrieb vorgesehenen Bereich zur Auslösung eines Taktes führt. Im Taktbetrieb werden von der Steuer- und Auswerteeinrichtung nur Eingriffe in den oder die dafür vorgesehenen Bereiche für eine entsprechende Steuerung der Maschine ausgewertet.

Vorzugsweise wird das Auswertefeld durch ein Lichtgitter definiert. Es wäre auch denkbar, dass das Auswertefeld durch eine sonstige berührungslos wirkende Anordnung, beispielsweise einen Laserscanner, definiert ist.

Bei einer zweckmäßigen praktischen Ausführungsform sind für den Sicherungsbetrieb und den Taktbetrieb vorzugsweise rechteckige Überwachungsfenster unterschiedlicher Höhe vorgebbar. So kann das dem Taktbetrieb zugeordnete Überwachungsfenster eine geringere Höhe besitzen als das dem Sicherungsbetrieb zugeordnete Überwachungsfenster.

Das dem Sicherungsbetrieb zugeordnete Überwachungsfenster und das dem Taktbetrieb zugeordnete Überwachungsfenster besitzen vorzugsweise die gleiche Breite. Dabei kann wenigstens das dem Sicherungsbetrieb zugeordnete Überwachungsfenster zumindest im Wesentlichen gleich breit wie das durch das Lichtgitter definierte optische Auswertefeld sein.

Für den Taktbetrieb ist vorteilhafterweise ein dem Bereich der Hände oder Arme von zu schützenden Personen zugeordnetes Überwachungsfenster. vorgebbar.

Die Steuer- und Auswerteeinrichtung kann überdies zur Erkennung eines vorgebbaren Bewegungsverlaufs eines jeweiligen dynamischen Eingriffs in das optische Auswertefeld ausgelegt sein.

Von Vorteil ist insbesondere, wenn mittels der Steuer- und Auswerteeinrichtung ein jeweiliger Übergang eines Eingriffs von einem definierten Feldbereich in einen anderen und/oder das Austreten aus einem definierten Feldbereich erkennbar ist.

Bei einer bevorzugten praktischen Ausführungsform der erfindungsgemäßen berührungslos wirkenden Schutzeinrichtung sind ein oder mehrere Bewegungsverläufe vorgebbar, bei deren Erkennung die Erzeugung eines Freigabesignals seitens der Steuer- und Auswerteeinrichtung unterdrückt wird.

Die Zuverlässigkeit der berührungslos wirkenden Schutzeinrichtung kann also noch dadurch gesteigert werden, dass die elektronische Steuer- und Auswerteeinrichtung auch die Übergänge von einem Bereich in einen anderen überwacht. Damit ist es zum Beispiel möglich, eine Handbewegung parallel zum Lichtgitter nach unten aus dem Lichtgitter heraus als eine Bewegung zu interpretieren, bei der kein Takt ausgelöst und entsprechend kein Maschinenzyklus gestartet werden soll. Dies bringt nicht nur eine höhere Zuverlässigkeit, sondern auch eine höhere Sicherheit mit sich. Dies gilt zum Beispiel für Maschinen mit mechanisch schwacher Werkstückauflage, bei der es passieren kann, dass Körperteile durch Herunterdrücken der schwachen Auflage zwar das Schutzfeld verlassen und somit einen Maschinenzyklus auslösen, während des gefährlichen Teils des Maschinenzyklus jedoch im Gefahrenbereich verbleiben.

Die Erfindung wird im Folgenden anhand eines Ausführungsbeispiels unter Bezugnahme auf die Zeichnungen näher erläutert, in dieser zeigen:
- Figur 1: eine schematische perspektivische Darstellung einer berührungslos wirkenden Schutzeinrichtung, bei der für den Sicherungsbetrieb das gesamte Auswertefeld und für den Taktbetrieb ein Teil dieses Auswertefeldes überwacht wird, und
- Figur 2: eine schematische perspektivische Darstellung einer anderen Ausführungsform der berührungslos wirkenden Schutzeinrichtung, bei der sowohl für den Sicherungsbetrieb als auch für den Taktbetrieb jeweils nur ein Teil des Auswertefeldes überwacht wird, wobei sich die beiden Überwachungsfenster überlappen.

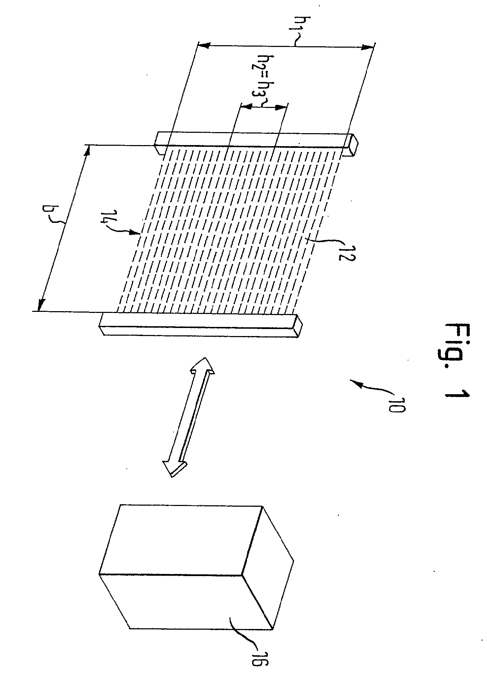

Figur 1 zeigt in schematischer perspektivischer Darstellung eine berührungslos wirkende Schutzeinrichtung 10, die zur Sicherung eines Gefahrenbereichs einer Maschine (nicht gezeigt) oder dergleichen ausgelegt ist.

Sie umfasst ein z.B. durch ein Lichtgitter 14 definiertes optisches Auswertefeld 12 und eine zugeordnete Steuer- und Auswerteeinrichtung 16, die auch in dem Lichtgitter 14 integriert sein könnte.

Das optische Auswertefeld 12 des Sicherheitslichtgitters 14 wird durch eine Vielzahl von Sende- und Empfangselementen gebildet. Dabei kann das optische Auswertefeld 12 beispielsweise zwischen zwei getrennten Sende- und Empfangseinheiten oder beispielsweise zwischen einer kombinierten Sende/Empfangs-Einheit und einer Reflektoreinheit gebildet sein.

Die zugeordnete Steuer- und Auswerteeinrichtung 16 ist außer für einen Sicherungsbetrieb, bei dem infolge eines jeweiligen Eingriffs in das optische Auswertefeld 12 ein Warn- oder Maschinenstoppsignal erzeugt wird, für einen Taktbetrieb ausgelegt, bei dem infolge wenigstens eines jeweiligen Eingriffs in das optische Auswertefeld 12 ein Freigabesignal erzeugt wird, um einen jeweiligen Maschinenzyklus freizugeben.

Dabei ist für den Sicherungsbetrieb und für den Taktbetrieb ein und dasselbe Auswertefeld 12 vorgesehen. Die Steuer- und Auswerteeinrichtung 16 ist so ausgelegt, dass nur ein Teil des Auswertefeldes 12 sowohl für den Sicherungsbetrieb als auch für den Taktbetrieb entsprechend überwacht wird.

In der Steuer- und Auswerteeinrichtung 16 ist das optische Auswertefeld 12 elektronisch in mehrere Bereiche unterteilt, die die Teilbereiche für den Sicherungsbetrieb und für den Taktbetrieb definieren.

Für den Sicherungsbetrieb und den Taktbetrieb können vorzugsweise rechteckige Überwachungsfenster unterschiedlicher Höhe h₁ bzw. h₂ vorgebbar sein. Das dem Taktbetrieb zugeordnete Überwachungsfenster kann somit vorzugsweise eine geringere Höhe h₂ besitzen als das dem Sicherungsbetrieb zugeordnete Überwachungsfenster, deren Höhe in der Fig. 1 mit h₁ angegeben ist.

Bei dem vorliegenden Ausführungsbeispiel besitzen das dem Sicherungsbetrieb zugeordnete Überwachungsfenster und das dem Taktbetrieb zugeordnete Überwachungsfenster eine gleiche Breite b, die im folgenden Fall der Breite des durch das Lichtgitter 14 definierten optischen Schutzfeldes 12 entspricht.

Das dem Taktbetrieb zugeordnete Überwachungsfenster h₂• b kann insbesondere im Bereich der Hände oder Arme der zu schützenden Person angeordnet sein.

In der Steuer- und Auswerteeinrichtung 16 wird somit das Schutzfeld 12 eines einzigen Lichtgitters 14 elektronisch in mehrere Bereiche unterteilt, die die Teilbereiche für den Sicherungsbetrieb und für den Taktbetrieb definieren. Durch die elektronische Steuer- und Auswerteeinrichtung 16 werden diese Bereiche entsprechend ausgewertet, um die Maschine entsprechend zu steuern.

Wie anhand der Figur 1 zu erkennen ist, wird beim vorliegenden Ausführungsbeispiel für den Sicherungsbetrieb das gesamte Auswertefeld 12 und für den Taktbetrieb ein Teil dieses Auswertefeldes 12 überwacht.

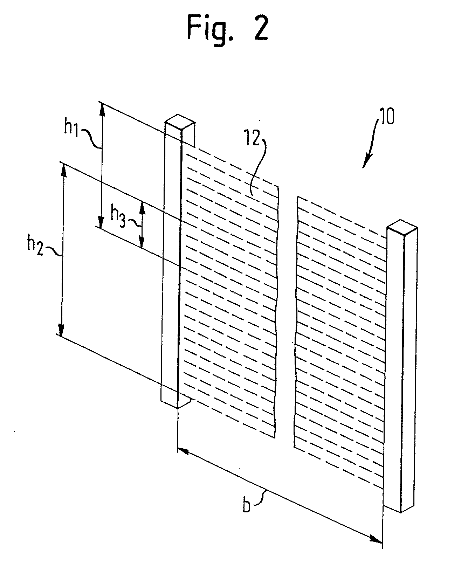

Dagegen ist in der Figur 2 eine Ausführungsform der berührungslos wirkenden Schutzeinrichtung 10 gezeigt, bei der sowohl für den Sicherungsbetrieb als auch für den Taktbetrieb jeweils nur ein Teil des Auswertefeldes 12 überwacht wird. Wie anhand dieser Figur 2 zu erkennen ist, überlappen sich beim vorliegenden Ausführungsbeispiel das für den Sicherungsbetrieb bestimmte Überwachungsfenster h₁ • b und das für den Taktbetrieb bestimmte Überwachungsfenster h₂ • b in einem Bereich h₃ • b. Bei der in der Figur 1 dargestellten Ausführungsform stimmt dieser Überlappungsbereich h₃ • b mit dem Überwachungsfenster h₂ • b überein.

Sowohl bei der Ausführungsform gemäß Figur 1 als auch bei der Ausführungsform gemäß Figur 2 ist die Steuer- und Auswerteeinrichtung 16 (nur in der Figur 1 dargestellt) demzufolge jeweils so ausgelegt, dass nur ein Teil h₃ • b des Auswertefeldes 12 sowohl für den Sicherungsbetrieb als auch für den Taktbetrieb entsprechend überwacht wird.

Grundsätzlich können auch mehrere nicht zusammenhängende Überwachungsfenster h₂ • b für den Taktbetrieb vorgesehen sein, wobei es in diesem Fall beispielsweise auch möglich ist, dass zwischen diesen für den Taktbetrieb bestimmten Überwachungsfenstern h₂ • b ein oder mehrere für den Sicherungsbetrieb bestimmte Überwachungsfenster h₁ • b liegen.

Die Zuverlässigkeit der berührungslos wirkenden Schutzeinrichtung 10 kann weiter erhöht werden, indem die Steuer- und Auswerteeinrichtung 16 überdies zur Erkennung eines vorgebbaren Bewegungsverlaufs eines jeweiligen dynamischen Eingriffs in das optische Schutzfeld 12 ausgelegt ist. Dabei ist mit dieser Steuer- und Auswerteeinrichtung 16 insbesondere auch ein jeweiliger Übergang eines Eingriffs von einem definierten Schutzfeldbereich in einen anderen und/oder das Austreten aus einem definierten Schutzfeldbereich erkennbar. Es können somit elektronisch auch die Übergänge von einem Bereich in einen anderen überwacht werden.

Es sind insbesondere auch ein oder mehrere Bewegungsverläufe vorgebbar, bei deren Erkennung die Erzeugung eines Freigabesignals seitens der Steuer- und Auswerteeinrichtung unterdrückt wird.

Indem durch die elektronische Steuer- und Auswerteeinrichtung 16 beispielsweise auch die Übergänge von einem Bereich in einen anderen überwacht werden können, ist es zum Beispiel möglich, eine Handbewegung parallel zum optischen Schutzfeld 12 nach unten aus dem Lichtgitter 14 heraus als eine Bewegung zu interpretieren, durch die kein Takt ausgelöst und entsprechend kein Maschinenzyklus gestartet werden darf. Damit wird nicht nur die Zuverlässigkeit, sondern auch die Sicherheit entsprechend erhöht. Dies gilt beispielsweise für Maschinen mit mechanisch schwacher Werkstückauflage, bei der es passieren kann, dass Körperteile mit dem Herunterdrücken der schwachen Auflage zwar das Schutzfeld verlassen und somit einen Maschinenzyklus auslösen, während des gefährlichen Teils des Maschinenzyklus jedoch in dem Gefahrenbereich verbleiben.

### Bezugszeichenliste

- 10: berührungslos wirkende Schutzeinrichtung
- 12: optisches Auswertefeld
- 14: Lichtgitter
- 16: Steuer- und Auswerteeinrichtung
- b: Schutzfeldbreite, Fensterbreite
- h₁: Höhe des dem Sicherungsbetrieb zugeordneten Überwachungsfensters
- h₂: Höhe des dem Taktbetrieb zugeordneten Überwachungsfensters
- h₁ • b: dem Sicherungsbetrieb zugeordnetes Überwachungsfenster
- h₂ • b: dem Taktbetrieb zugeordnetes Überwachungsfenster
- h₃ • b: Überlappungsbereich

## Patentansprüche

1. Berührungslos wirkende Schutzeinrichtung (10) zur Sicherung eines Gefahrenbereichs einer Maschine oder dergleichen, mit einem optischen Auswertefeld (12) und einer Steuer- und Auswerteeinrichtung (16), die außer einem Sicherungsbetrieb, bei dem infolge eines jeweiligen Eingriffs in das Auswertefeld (12) ein Warn- oder Maschinenstoppsignal erzeugt wird, einen Taktbetrieb ermöglicht, bei dem infolge wenigstens eines jeweiligen Eingriffs in das Auswertefeld (12) ein Freigabesignal erzeugt wird, um einen jeweiligen Maschinenzyklus freizugeben, wobei für den Sicherungsbetrieb und für den Taktbetrieb ein und dasselbe Auswertefeld (12) vorgesehen und die Steuer- und Auswerteeinrichtung (16) so ausgelegt ist, dass nur ein Teil (h₃ • b) des Auswertefeldes (12) sowohl für den Sicherungsbetrieb als auch für den Taktbetrieb entsprechend überwacht wird.

2. Schutzeinrichtung nach Anspruch 1,
**dadurch gekennzeichnet,**
**dass** das optische Auswertefeld (12) in der Steuer- und Auswerteeinrichtung (16) elektronisch in mehrere Bereiche unterteilt ist.

3. Schutzeinrichtung nach Anspruch 1 oder 2,
**dadurch gekennzeichnet,**
**dass** das Auswertefeld (12) durch ein Lichtgitter (14) definiert ist.

4. Schutzeinrichtung nach einem der vorhergehenden Ansprüche,
**dadurch gekennzeichnet,**
**dass** für den Sicherungsbetrieb und den Taktbetrieb vorzugsweise rechteckige Überwachungsfenster (h₁ • b bzw. h₂ • b) unterschiedlicher Höhe (h₁ bzw. h₂) vorgebbar sind.

5. Schutzeinrichtung nach Anspruch 4,
**dadurch gekennzeichnet,**
**dass** das dem Taktbetrieb zugeordnete Überwachungsfenster (h₂ • b) eine geringere Höhe (h₂) besitzt als das dem Sicherungsbetrieb zugeordnete Überwachungsfenster (h₁ • b) .

6. Schutzeinrichtung nach Anspruch 4 oder 5,
**dadurch gekennzeichnet,**
**dass** das dem Sicherungsbetrieb zugeordnete Überwachungsfenster (h₁ • b) und das dem Taktbetrieb zugeordnete Überwachungsfenster (h₂ • b) eine gleiche Breite (b) besitzen.

7. Schutzeinrichtung nach einem der vorhergehenden Ansprüche,
**dadurch gekennzeichnet,**
**dass** für den Taktbetrieb ein dem Bereich der Hände oder Arme von Personen zugeordnetes Überwachungsfenster (h₂ • b) vorgebbar ist.

8. Schutzeinrichtung nach einem der vorhergehenden Ansprüche,
**dadurch gekennzeichnet,**
**dass** die Steuer- und Auswerteeinrichtung (16) überdies zur Erkennung eines vorgebbaren Bewegungsverlaufes eines jeweiligen dynamischen Eingriffs in das optische Auswertefeld (12) ausgelegt ist.

9. Schutzeinrichtung nach einem der vorhergehenden Ansprüche,
**dadurch gekennzeichnet,**
**dass** mittels der Steuer- und Auswerteeinrichtung (16) ein jeweiliger Übergang eines Eingriffs von einem definierten Feldbereich in einen anderen und/oder das Austreten aus einem definierten Feldbereich erkennbar ist.

10. Schutzeinrichtung nach Anspruch 8 oder 9,
**dadurch gekennzeichnet,**
**dass** ein oder mehrere Bewegungsverläufe vorgebbar sind, bei deren Erkennung die Erzeugung eines Freigabesignals seitens der Steuerund Auswerteeinrichtung (16) unterdrückt wird.
